# EUROPEAN PATENT APPLICATION

(11) **EP 4 567 387 A1**
(43) Date of publication of application: **11.06.2025**
(21) Application number: 24217486.0
(22) Date of filing: 04.12.2024
(51) Int. Cl.: G01J 3/52

(54) **APPARATUS FOR MEASURING COLOUR PARTICULARLY FOR DIGITAL PRINTING**

(30) Priority: 07.12.2023 IT 202300026238
(71) Applicant: Barbieri Electronic OHG des Barbieri Siegfried & C. (ovvero Barbieri electronic snc), 39042 Bressanone BZ (IT)
(72) Inventor: BARBIERI, Markus, 39040 Varna BZ (IT); BARBIERI, Stefan, 39042 Bressanone BZ (IT)
(74) Representative: De Sandre, Emanuele

(57) **Abstract**

The present invention relates to an apparatus (10) for measuring colour particularly for digital printing, comprising:
a) handling means (17) having at least three degrees of freedom, said handling means (17) comprising a support base (18), an articulated group (19) and an end element (20),
b) a spectrum measuring device (11), being mounted on said end element (20) of said handling means (17), in turn comprising
- a box-like body (12) having a first face (13) intended, in use, to face a test chart (T), said test chart (T) including a plurality of adjacent colour area, said first face (13) being provided with a window (15);
- a spectral sensor (16) configured to measure the colour spectrum data of a light (L) received through said window (15), the received light (L) being a light reflected from said test chart (T) or a light transmitted through said test chart (T);

c) a first image acquisition device (23) configured to capture one or more images (IM), or a video, of at least a portion of said test chart (T),
d) an electronic control unit (24) connected to the handling means (17), to the spectrum measuring device (11) and to the first image acquisition device (23); the electronic control unit (24) is configured to analyse the test chart (T) and to determ ine:
- the type, the dimensions and the position of said test chart (T),
- the position of each colour area of the test chart (T),
- the motions of the handling means (17) for positioning the spectrum measuring device (11) in subsequent measurement positions.

## Description

### Technical field

The present description relates to the field of the colour measurement on a printed item.

More specifically, the present description relates to an apparatus for detecting colour, particularly for digital printing; it is then a unit for colour measurement to measure a colour on a printed item, for example of a sheet of colour samples which in jargon is called 'test chart', that is a table of test colours.

For example, the measurement is a reflecting or transmissive measurement. The printed item can be printed also with a 3D printer. Analogously, a print of sample colours can be printed on a three-dimensional medium.

### Technical background

In order to calibrate a digital printer to reproduce colours with the desired quality and accuracy, the printer prints a sheet of test colour samples arranged according to a predetermined pattern.

Generally, in order that one could proceed with profiling a peripheral unit, procedure which describes the behaviour thereof, it is necessary at first to calibrate it, procedure that brings the peripheral unit to a known and repeatable state.

In case of the digital printers, the calibration consists in selecting the driver parameters. Such parameters comprise the selection of the medium type, of the resolution and of the printing mode. Even the use of the correct type of paper results to be fundamental, in fact the same printer can have well different behaviour as the type of medium on which it prints varies.

For creating a printer profile, generally a spectrophotometer is used. The latter, thanks to a suitable provided software, is capable of reading the prints of one or more colour reference test charts and to analyse them with the purpose of describing the colour behaviour of the printer on a certain flexible medium; generally, a medium can consist of a sheet of paper, a sheet of plastic material, a sheet of fabric or a plate made of rigid material such as for example ceramics or wood or still plastic material, or an object printed with a colour 3D printer.

Such printed colour table indeed defines a 'test chart', which comprises one or more rows of fields, or samples, having different reference colours, that is different test colours.

The test table is scanned by a measurement device such as a spectrophotometer, which measures the colour samples and provides a series of data characterizing the printed colours of the samples of the test table.

These data are spectral values of the colours.

The set of data, which is representative of the producible colour range of the printer, is used to create the ICC profiles of the printer and allows to reproduce correctly the expected colours on the pre-established medium.

Moreover, such data can be used for the quality control, by comparing such data with pre-established values.

The known spectrophotometric devices are then commonly used in the field of the colour measurement for calibrating and controlling a digital printer.

In particular, a spectrophotometric device provides a colour measurement of the light coming from an entire region for measuring the related colour sample; for example, the light is reflected by the colour sample or is transmitted through the colour sample.

By measuring a same sample with different ratios between sample illumination area and sample reading area it is possible to detect even information relating the sample translucency.

The test table generally comprises a matrix of rectangles, where each rectangle defines a measurement region; each measurement region generally has an area of few square millimetres.

Therefore, the obtained data allow to establish how much the colour of a printed sample, as perceived by a person, differs from the perception of the desired colour.

These data are very precious for the calibration and for obtaining a printer characterization profile.

The spectral data are representative of an average colour on an entire sample measurement region.

Therefore, the known measurement devices are not capable of detecting a inhomogeneous distribution of the colour on a same sample or highlighting small defects and other printing defects inside the measurement area.

The present description is based on the technical problem of providing a colour measurement device which is useful to improve the devices of known art by overcoming at least one of the drawbacks mentioned with reference to the known art and/or capable of achieving additional advantages.

Currently, in the field of the digital printing instruments are known which rely on the printed colour table, the latter also known as 'chart' or as 'colour target', to measure with a spectrophotometer the spectral measurements of each one of the boxes which make up the table and thus to obtain the so-called 'colour profile' of the printer.

The purpose of such currently known devices with spectrophotometer is to make a digital printer to use the colours with which it is loaded so that the real printing approaches as much as possible, and preferably corresponds fully, to the image visible on a screen of an electronic control unit connected to the printer.

In the industrial field the digital printing on surfaces of the most varied materials is gaining ground.

For example, digital printing on ceramic plates and digital printing on textiles are increasingly widespread.

Apparatuses for measuring colour of a colour chart are currently known and widespread, which comprise a first body, defining a reference base, and a second body comprising a spectrophotometer for detecting the colours of a 'test chart', that is a table of colours, where the second body is movable with respect the first body along a detection direction; a rail guides the relative translation of the second body with respect to the first one; the first body comprises an electronic unit for controlling and managing the data detected by the second body; the second body comprises, apart from the spectrophotometer, an illumination system configured to illuminate a surface for the detections of the spectrophotometers; the first body is connected electrically to the second body through one or more electrical connection cables, through which the energy is provided, necessary to the operation of the illumination elements and of the spectrophotometer and for transmitting the signals detected by the spectrophotometer to the electronic control unit.

The second body, which is a typically box-like body, has pointing elements configured so as to highlight to a user that the second body is translating in a correct direction, that is aligned with the axis of the centres of the colour rectangles of a table of colours on which the detections for implementing the colour profile of a digital printer are being performed; such pointing elements can be laser pointers or arrow-like appendixes projecting from the bottom of the second body.

Such apparatus has to be positioned on a support plane, next to the first body the 'test chart' is rested, that is the colour table printed by the digital printer to be calibrated, and then the second body is brought manually by a user above the 'test chart'; the correctness of the linear motion is left to the same user who has to make sure that the pointing elements are always correctly aligned with the axis of the centres of the colour rectangles of the colour table.

A similar apparatus, already set forth by the European patent EP2751533B1 in the name of the same applicant, although widespread and appreciated has some perfectible aspects.

A first perfectible aspect is linked to the fact that a similar apparatus of known type is well suitable for measurements on 'test chart' implemented on flat and regular surfaces, which are generally sheets of paper material positioned on a table or other generally flat support.

Similar apparatuses of known type are not suitable particularly for detections on irregular surfaces as fabrics and ceramic plates can be, as even slight variations in distance between the detection point of the spectrophotometer and the surface of the test chart could cause non-uniform or imprecise measurements, then useless or worse incorrect.

A second limit of the mentioned apparatuses of known type is constituted by the fact that the second body, with the spectrophotometer and the illumination system on board, has to be operated manually by a user, where the manual guide can lead to detection errors due to an irregular advancement or an imprecise trajectory.

A third limit of the apparatuses for measuring colour of known type is linked to the fact that for their correct operation it is required that the 'test chart' is positioned correctly with respect to the portion containing the spectrophotometer.

### Summary of the invention

The goal of the present invention is then to devise an apparatus for measuring colour particularly for digital printing capable of obviating the above-mentioned limits of the known art.

In particular, an object of the invention is to devise an apparatus capable of performing colour measurements both on flat surfaces, and on not perfectly flat surfaces, such as the so-called `2.5D' printing, and on 3D surfaces.

Another object of the present invention is to devise an apparatus capable of operating autonomously, without the need for being operated manually by a human operator.

Still an object of the present invention is to devise a measurement apparatus capable of performing colour measurements even in presence of a test chart positioned not perfectly with respect to what expected.

Another object of the present invention is to devise a highly flexible measurement apparatus, which can be associated to digital printers of known type on itself and also already operating on itself.

Such goal and such objects are achieved by an apparatus for measuring colour particularly for digital printing according to claim 1.

Preferred features of the present invention are set forth in the depending claims. The colour measuring apparatus according to the invention has as main goals the automation of the colour measuring procedures used in the field of the digital printing, including the colour control through a test chart.

The colour measuring apparatus according to the invention comprises three main components:
a) handling means having at least three degrees of freedom,
b) a spectrum measuring device, in turn comprising a box-like body containing a spectral sensor configured to measure the colour spectrum data of a light received through a window of the box-like body, the received light being a light reflected from un test chart or a light transmitted through said test chart; the spectrum measuring device is mounted on the end element of the handling means;
c) a first image acquisition device configured to capture one or more images, or a video, of at least a portion of the test chart,
d) an electronic control unit connected to the robot, to the spectrum measuring device and to the first image acquisition device; such electronic control unit is configured to analyse said at least a portion of said test chart and to determine:
   - the type of said test chart,
   - the dimensions and the shape of said test chart,
   - the position of said test chart with respect to a reference coordinate system of the robot,
   - the position of each colour area of said test chart,
   - the motions of the handling means for positioning said spectrum measuring device in subsequent measurement positions, each measurement position being defined by the position of the window of the box-like body facing a colour area of the test chart.

The apparatus according to the invention advantageously and preferably comprises also a second image acquisition device arranged integrally and near the spectral sensor, said second image acquisition device being configured to acquire one or more images, or a video, of a single colour area of said test chart. The handling means preferably and advantageously comprise a collaborative robotic arm, of the type also known as 'cobot'; it is responsible for positioning the spectral sensor, where the latter is preferably a spectrophotometer.

The spectrum measuring device substantially defines a measuring head comprising a spectrophotometer and moreover a second image acquisition device, such spectrum measuring device being configured and used to acquire the colour precisely and quickly on various materials and, thanks to the second image acquisition device, to detect images of the specific colour areas on which the measurements are performed.

Such first and second image acquisition devices can consist of a digital camera and a digital video camera.

The spectrum measuring device, inside its box-like body which contains the spectral sensor and the second image acquisition device, also comprises illumination means configured to illuminate the test chart through the window of the box-like body.

Such illumination means comprises a standardized illumination system (example D50) having 45-degree angle to correspond to the detection as indicated in the International regulation ISO 13655, as well as in the regulations CIE 15 and CIE 176.

In particular, the first image acquisition device is integral with the robot end element.

Consequently, such first image acquisition device is fixed with respect to the spectrum measuring device, that is between a first camera or video camera and the spectrophotometer there is a distance which is fixed.

Advantageously, the vision system of the first image acquisition device includes 'computer vision' and artificial intelligence (AI) algorithms; such computer vision algorithms allow the apparatus according to the invention, through the electronic control unit, to recognize a test chart, that is 'test charts', that is tables of colours, which is near the robot, to recognize such test chart as a body on which measurements are to be performed, and subsequently to guide the robot motions with respect to the test chart.

The first image acquisition device can comprise an illumination system positioned on, or in, the camera or video camera, and integral thereto, or it can comprise an illumination system external to the camera or video camera, that is positioned in a point surrounding the test chart different from the point in which there is the camera or video camera, so as to be able to detect the same colours under different illumination angles, to detect BRDF (bidirectional reflectance differential function).

The measuring apparatus according to the invention then preferably can comprise two cameras or video cameras, a first one, defining the first image or video acquisition device, configured to perform a vision from afar, or global vision, of the test chart and its surroundings, and a second one, defining the second image or video acquisition device, configured to perform a close-up or local vision.

Optionally the measuring apparatus according to the invention can comprise even a three-dimensional sensor; such three-dimensional sensor allows to obtain the coordinates of the points of interest in three-dimensional terms, then if a chart has a certain thickness, or it is posed or fixed on a support which spaces it from a reference plane, the apparatus through the three-dimensional sensor is capable of detecting precisely the position of the points of the profiling test chart, thus allowing the robot to move with equal precision.

The cameras, or video cameras, of the first and second image acquisition devices (both RGB cameras and multichannel/multispectral cameras), can be managed automatically by the electronic control unit and they can estimate the spectral information of each single acquired pixel, by combining the information of the spectrophotometer on known areas of the image acquired with the data provided by the camera.

The apparatus according to the invention is also capable of measuring a test chart having different heights and having deformations, as fabric target. Moreover, the apparatus according to the invention integrates 'anomaly detection' systems to minimize anomalies during the measuring procedure.

Such apparatus according to the invention, as mentioned above, then finds application in the quality control of the digital printing and uses 'machine learning' technologies so as to recognize new test charts and so as to optimize the measuring processes; such 'machine learning' is to be meant used with the purpose of `self learning', that is data collection with the purpose of self-educating and progressively improving independently.

Moreover, the apparatus according to the invention optionally receives information from the printer manager software (R.I.P. and the like) to understand which test chart is printed and requested to be measured.

The apparatus then transfers autonomously the measured spectral values to the printer management software.

A first phase for using the measuring apparatus of colours according to the invention provides the printing and the positioning of the test chart.

The user positions the test chart in a working area defined by the view of the first image or video acquisition device, which first image or video acquisition device is mounted on the robot, where the robot is in a pre-established starting position, in jargon called '"home" position'.

Such working area can be specified based on the application thereto the measuring apparatus is intended.

Such area can even correspond to the area after the printout comes out from the printer.

A second operation phase of the apparatus according to the invention provides that the first image or video acquisition device takes a photo or takes several photos in a row, or takes video, of the working area.

According to the known art, the test charts have to be positioned manually with great precision on a specific support associated to the spectrum measurement device.

With the apparatus according to the invention such step is no more required since the image, or the images if more than one, acquired by the first image acquisition device is processed so as to determine a position of the test chart with respect to the robot.

In order to identify the test chart, the electronic control unit of the apparatus according to the invention is programmed with classical 'computer vision' and 'deep learning' algorithms. More specifically, optionally and not limitedly, an 'object detection' algorithm is used to identify the position of the test chart in the image acquired by the first image acquisition device, and, subsequently a 'deep learning' algorithm is used, based on a 'convolutional neural network', to estimate a 'heat map' which highlights the measurement points contained in the test chart. At last, the 'heat map' is further processed by means of classical 'computer vision' algorithms to extract the ordered list of the points detected on the test chart, with respect thereto the electronic control unit is programmed to calculate the robot motions so as to bring progressively and subsequently the measuring device above each one of such measuring points for performing the measurements.

Then, once the measurement points are identified in the test chart, such measurement points are converted into coordinates with respect to the robot, so that the same robot is capable of positioning correctly the measuring sensor with respect to the single colour areas of the test chart.

In order to perform such conversion, one of the following methods can be used:
- photogrammetry,
- Structured light
- 3D-T.O.F. camera
   - use of a three-dimensional sensor,
   - positioning of reference marker in the working area to allow the electronic control unit to calculate the three-dimensional coordinates of the positions of the measurement points;
- calibration with a fixed plane, that is by using a predefined physical surface known to the robot.

Independently from the selected method, the system has to be pre-calibrated, that is the transform between robot and camera has to be determined before use. In the measuring phase, wherein the colour measuring device detects the spectrum of the various colour areas of a test chart, the robot moves on the measurement points, by moving the measuring device along a pre-calculated trajectory. During this process, the second image or video acquisition device monitors in real time the trajectory, by allowing to correct errors or anomalies, such as displacements of the test chart or wrong identifications performed by the first image or video acquisition device. In case of most significant anomalies, the measuring procedure is interrupted and the anomaly is immediately signalled to the user.

The system is studied so as to use the machine learning to avoid new future interruptions.

In summary, the apparatus according to the invention, in a preferred, but not exclusive, embodiment thereof comprises:
- a spectrophotometer mounted on a mobile portion of a collaborative portion,
- a first image acquisition device, or a first camera or video camera, mounted directly on the mobile robotic arm in external fixed position with respect to the robotic arm, which sees the test chart and acquires the data for calculating the magnitude of the same test chart, the position of the same in the working area surrounding the robot, and the position of the single colour areas (patches) inside the test chart,
- and a second image acquisition device, that is a second camera or video camera, which second image acquisition device is positioned, configured and moved so as to see in approached way the exact position of the colour area, or 'patch', of the patch centre; the images acquired by such second image acquisition device are analysed by the electronic control unit so as to verify if the spectrophotometer is really measuring inside the patch, and so as to correct, in case, the robot trajectory so that the spectrophotometer performs the detections really inside a provided patch.

The second camera or video camera guarantees that the detection takes place in the patch, that the part which is detected by the spectrophotometer is really a portion of the expected colour, and that the area is uniform.

Additional features and advantages of the invention will be more evident from the description of a preferred, but not exclusive, embodiment of the apparatus for measuring colour particularly for digital printing according to the invention, supported by the drawings proposed by way of example and not for limiting purposes in the enclosed tables and illustrated hereinafter.

### Brief description of figures

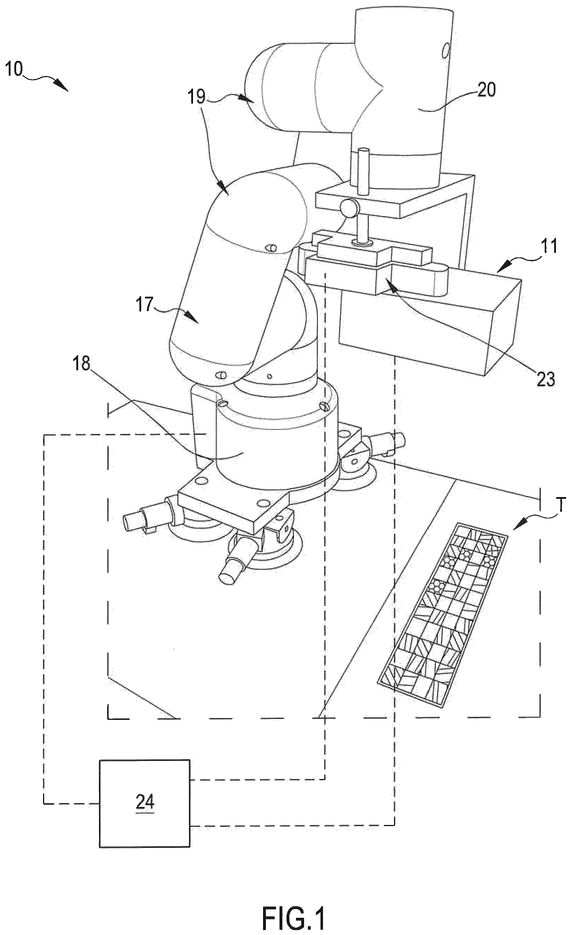

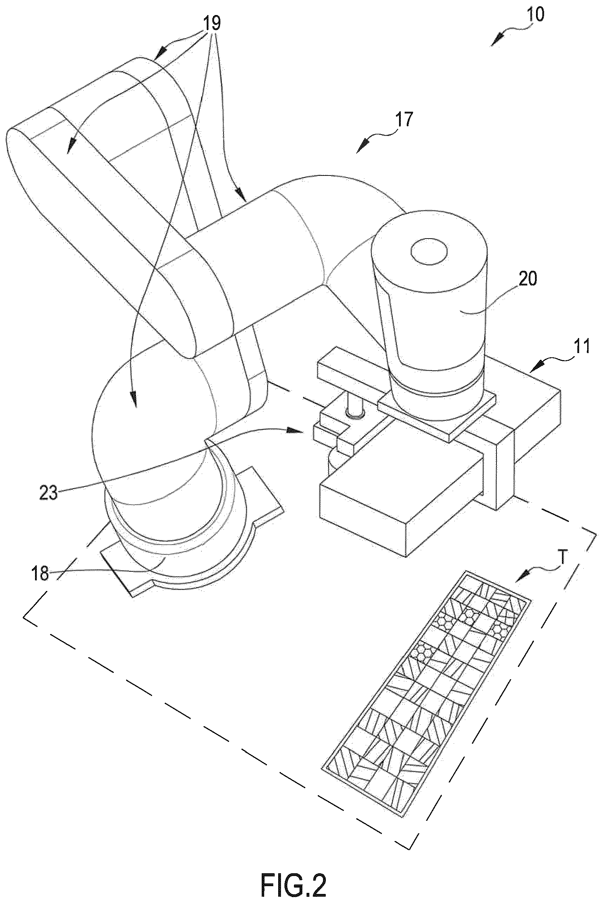

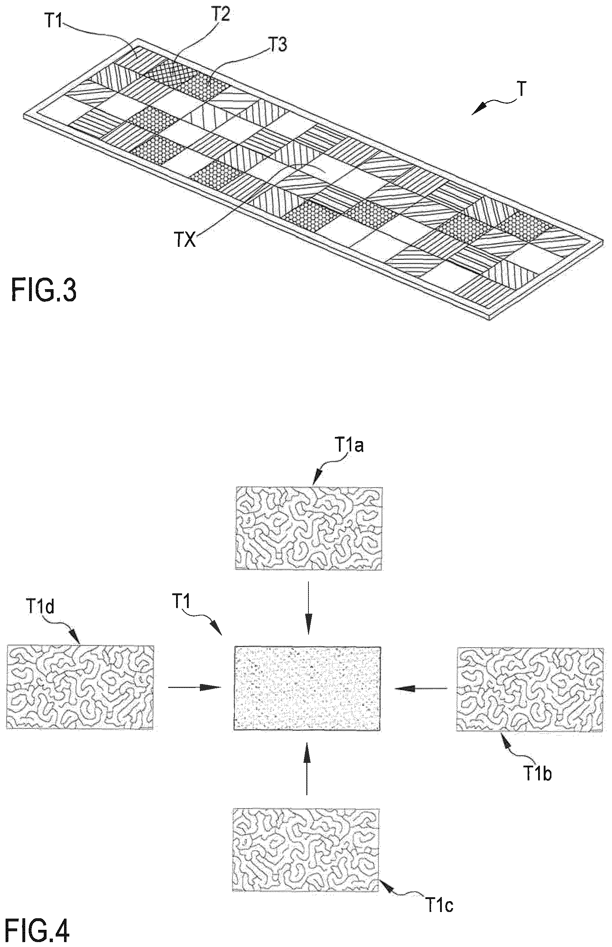

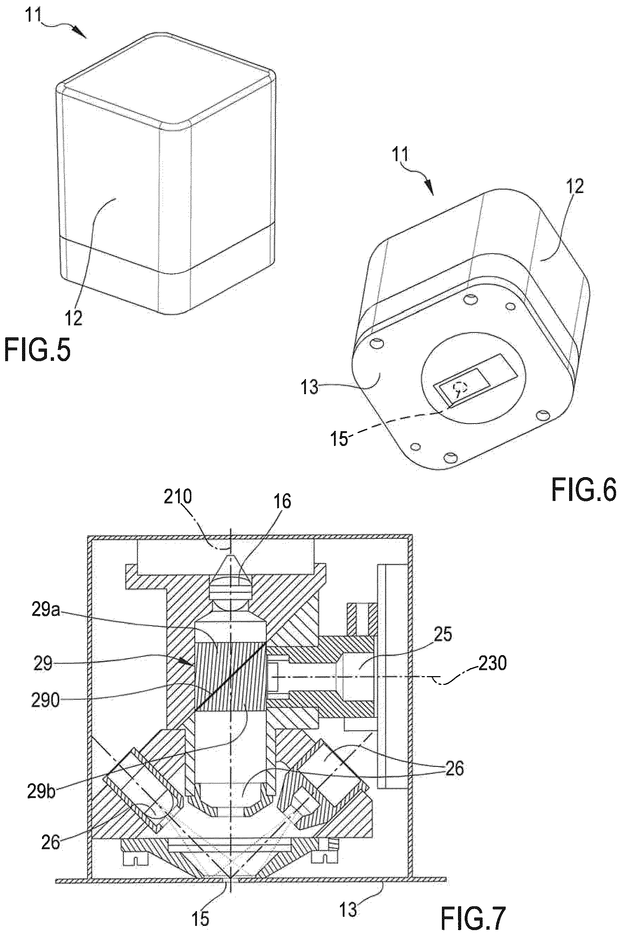

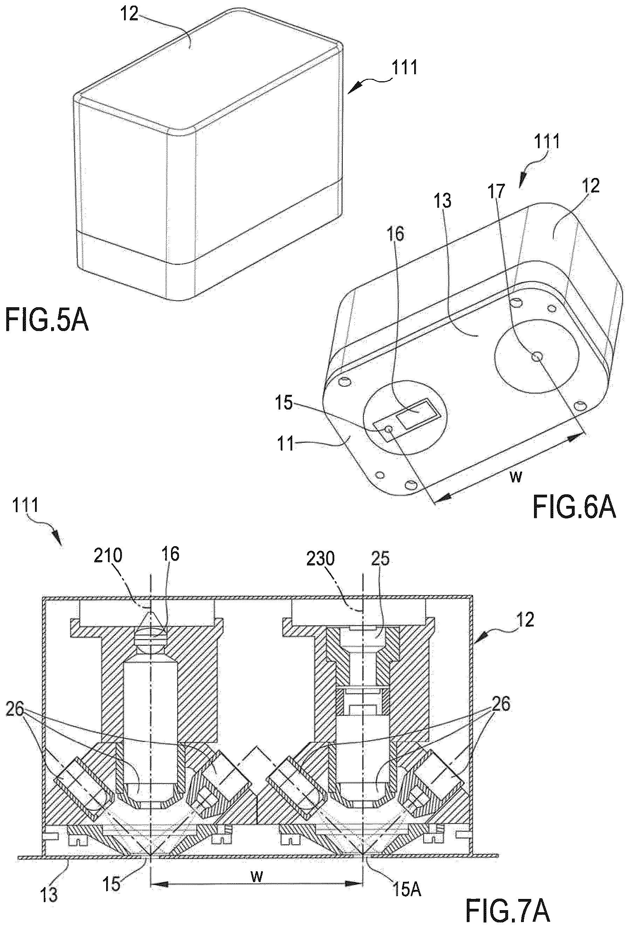

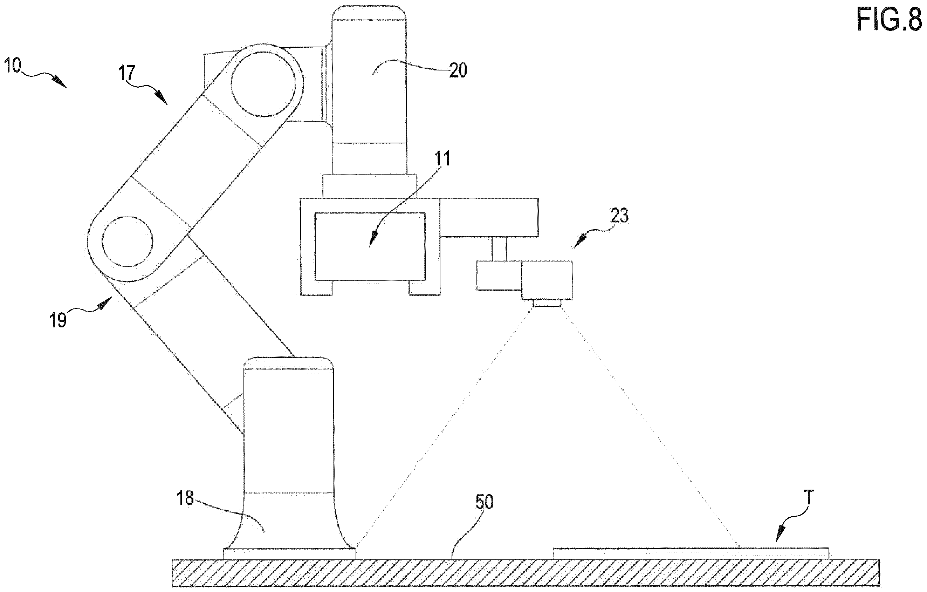

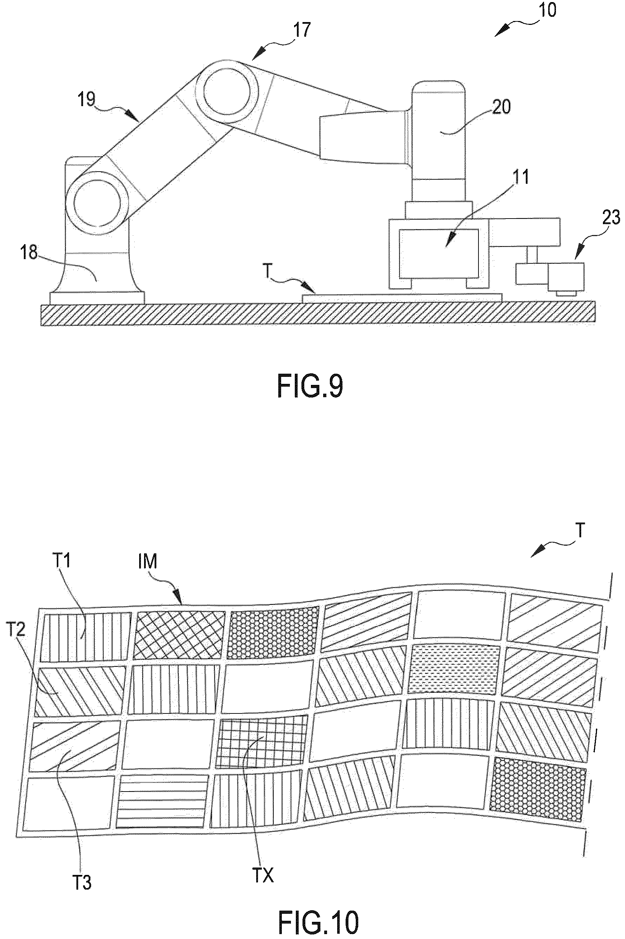

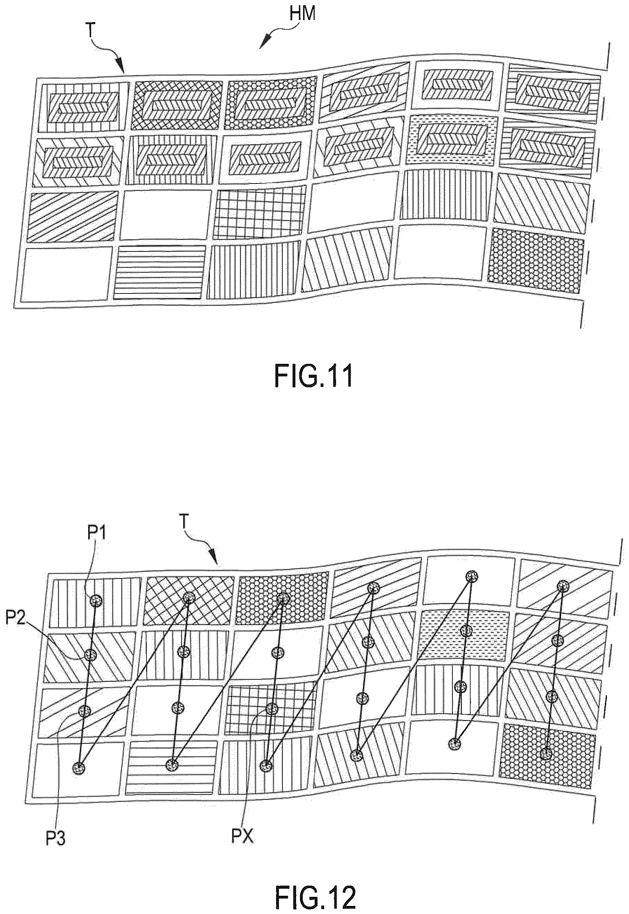

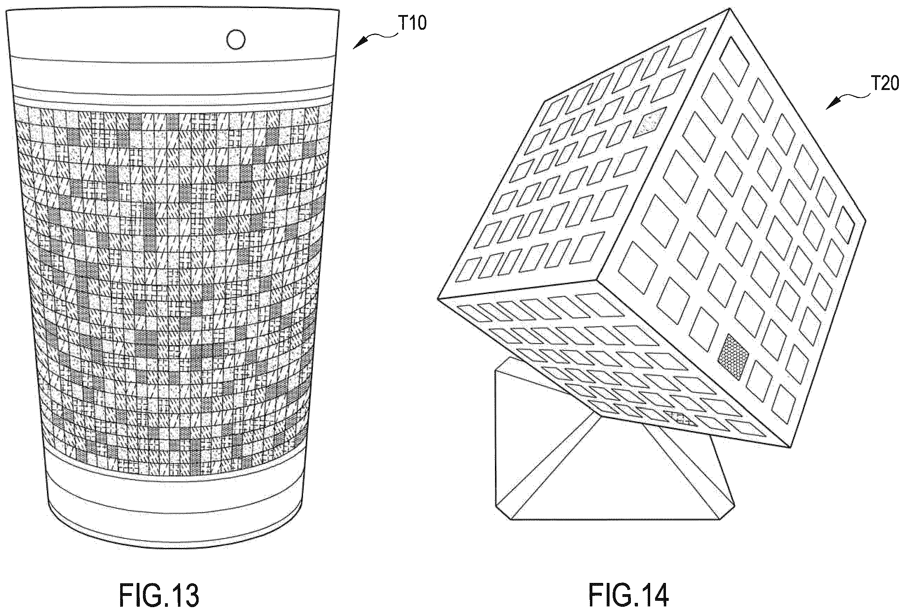

The figures of the enclosed drawings will be referred to, wherein:
▪ figure 1 represents a perspective view of an apparatus according to the invention;
▪ figure 2 represents a different perspective view of an apparatus according to the invention;
▪ figure 3 represents schematically a 'test chart', or a table of colours, for calibrating digital printers;
▪ figure 4 represents schematically the composition of a colour of the table of colours;
▪ figure 5 represents a perspective view of a component of the apparatus according to the invention;
▪ figure 6 represents a different perspective view of the component of figure 5;
▪ figure 7 represents a lateral view according to a longitudinal section of the component of figures 5 and 6;
▪ figure 5A represents a perspective view of a component of the apparatus according to the invention in an embodiment variant thereof;
▪ figure 6A represents a different perspective view of the component of figure 5A;
▪ figure 7A represents a lateral view according to a longitudinal section of the component of figures 5A and 6A;
▪ figure 8 represents a lateral view di an apparatus according to the invention in a first operation position;
▪ figure 9 represents the lateral view of figure 8 in a second operation position;
▪ figure 10 represents a schematized plan view of a not perfectly flat table of colours, in a first operation phase of the apparatus according to the invention;
▪ figure 11 represents a schematized plan view of the table of colours of figure 10 seen from the apparatus in a second operation phase;
▪ figure 12 represents a schematized plan view of the table of colours of figures 10 and 11 seen from the apparatus in a third operation phase;
▪ figure 13 represents another type of 'test chart';
▪ figure 14 represents an additional different type of 'test chart'.

The thicknesses and the curvatures represented in the above-mentioned figures are to be meant as purely exemplifying, are generally magnified and are not necessarily shown in proportion.

### Detailed description of preferred embodiments

Various embodiments and variants of the invention will be described hereinafter and this with reference to the above-mentioned figures.

Analogous components are designated in the different figures with the same numeral reference.

In the following detailed description, additional embodiments and variants with respect to embodiments and variants already treated in the same description will be illustrated limited to the differences with what already illustrated.

Moreover, the different embodiments and variants described hereinafter are subject to be used in combination, where compatible.

By firstly referring to figure 1, according to an embodiment of the invention, an apparatus for measuring colour particularly for digital printing is designated as a whole with number 10.

Such apparatus 10 comprises:
a) handling means 17 having at least three degrees of freedom; such handling means 17 comprises a support base 18, an articulated group 19 and an end element 20,
b) a spectrum measuring device 11, exemplified in figures 5 to 7, in turn comprising:
   - a box-like body 12 having a first face 13 intended, in use, to face a test chart T, such test chart T is exemplified in figure 3; a test chart is also known as 'colour test chart'; the test chart T comprises a plurality of adjacent colour area; typically, the test chart T comprises an ordered matrix of quadrangular areas T1, T2, T3, Tx each one with a different colour from the colours of the adjacent quadrangular areas; the first face 13 is provided with a window 15;
   - a spectral sensor 16 configured to measure the colour spectrum data of a light L received through said window 15, the received light L being a light reflected from the test chart T, or a light transmitted through the test chart T.
   The spectrum measuring device 11 is mounted on the end element 20 of said handling means 17;
c) a first image acquisition device 23 configured to capture one or more images IM, or a video, of at least a portion of the test chart T; an example of image IM of the test chart T is schematized in figure 10;
d) an electronic control unit 24 connected to the handling means 17, to the spectrum measuring device 11 and to the first image acquisition device 23; the electronic control unit 24 is configured to analyse the at least a portion of said test chart T and to determine:
   - the type of test chart T,
   - the dimensions of said test chart T,
   - the position of said test chart T with respect to a reference coordinate system of said handling means 17,
   - the position of each colour area of said test chart T,
   - the motions of the handling means 17 for positioning the spectrum measuring device 11 in subsequent measurement positions, each measurement position being defined by the position of the window 15 facing said colour area.

The electronic control unit 24, to be meant of type known on itself, is schematized with a rectangle of figure 1.

The first image acquisition device 23 is fixed to the end element 20 of the handling means 17.

The first image acquisition device 23 is to be meant as comprising a digital camera or digital video camera.

Preferably, but not exclusively, the apparatus according to claims 1 or 2, comprises a second image acquisition device 25 positioned fixed and in proximity to the device of said spectral sensor 16.

The second image acquisition device 25 is configured to acquire one or more images, or a video, of a single colour area of said test chart T, that is of each quadrangular area T1, T2, T3, Tx; under 'Tx' any general quadrangular area of the test chart T is meant.

The second image acquisition device 25 comprises a digital camera or a digital video camera.

Figure 4 represents schematically by way of example a quadrangular area T1 of the test chart T broken down in the various imprints of different primary colours T1a, T1b, T1c, T1d constituting it.

The colour of the quadrangular area T1 is formed for example by the overlapping of a black imprint T1a, a magenta imprint T1b, a yellow imprint T1c, a cyan imprint T1d.

The colours of each quadrangular area T1, T2, T3, Tx differ from one another depending on how the individual respective imprints of primary colour differ from each other.

The test chart is to be meant as being able to be a substantially three-dimensional test chart.

In figure 13 a three-dimensional test chart T10 is exemplified having substantially cylindrical shape, wherein the quadrangular areas are printed on a cylindrical medium according to a substantially circular trajectory.

In figure 14 a three-dimensional test chart T20 is exemplified having substantially parallelepiped shape, and in particular cubic shape, wherein the quadrangular areas are printed in ordered way on the six faces of the parallelepiped shape.

In particular, and preferably, the handling means 17 is defined by a six-axis collaborative robot.

An measuring apparatus 10 according to the invention is then capable of moving the spectrum measuring device 11 so that is performs detections and measurements even on a three-dimensional test chart, then by moving the spectrum measuring device 11 to work in a plurality of different measurement directions.

In a variant of the apparatus according to the invention, not illustrated but to be meant as comprised in the invention, the handling means is of the three-axis type and is incorporated inside the containment body of a digital printer at the exit area of the printed sheets.

A first embodiment variant of the spectrum measurement device 11 is exemplified in figures 5, 6 and 7.

Such spectrum measurement device 11 comprises illumination means configured to illuminate the test chart T through the window 15.

Such illumination means comprises, for example, a plurality of leds 26.

Such plurality of leds 26 is configured so as to emit a standardized illumination D50 with 45° angle as indicated in the International regulation ISO 13655, CIE 15, CIE 176.

In such first embodiment variant, the spectral sensor 16 performs the colour measurements through the window 15 according to a first direction 210 substantially orthogonal to the surface of the test chart T.

In particular, the first face 13 is substantially flat and the spectral sensor 16 performs the measurements according to a first optical axis which is parallel or coincident with a first direction 210 substantially orthogonal to the window 15 and to the first face 13 in which the window 15 is defined.

The second image acquisition device 25 too is placed inside the box-like body 12 of the spectrum measuring device 11.

The second image acquisition device 25 performs the image acquisitions according to a respective optical axis which is parallel or coincident with a second direction 230 which is transversal, and preferably orthogonal, to the first direction 210.

In such first variant of the spectrum measuring device 11, inside the box-like body 12 there are means for dividing the light beam entering from the window 15 configured to allow the passage thereof partially towards the spectrum sensor 16 and partially towards the second image acquisition device 25.

In such first embodiment variant the means for dividing the light beam comprises a tilted semi-transparent mirror or, as represented in figure 7, a prism 29.

Such prism 29 comprises two portions 29a and 29b facing each other through respective tilted flat surfaces 290; at least one of such tilted surfaces 290 is semi-reflecting.

A second embodiment variant of the spectrum measurement device is represented in figures 5A, 6A, 7A and it is herein designated with number 111.

In such second embodiment variant, not limiting the invention too, the spectral sensor 16 performs the colour measurements through the window 15 according to a first optical axis which is parallel or coincident with a first direction 210 substantially orthogonal to the window 15 and to the first face 13 in which the window 15 is defined, whereas the second image acquisition device 25, placed too inside the box-like body 12 of the spectrum measuring device 11, performs the image acquisitions according to a respective optical axis which is parallel or coincident with a second direction 230 which is parallel to the first direction 210. The first face 13 of the box-like body 12 comprises a second window 15A configured to allow the image acquisition by the second image acquisition device 25.

Such second window 15A is arranged at a distance W from the first window 15, where the distance W is also the interaxis distance between the first direction 210 and the second direction 230.

Advantageously, the electronic control unit 24 is configured to identify the position of the test chart T by computer vision and deep learning algorithms.

Preferably and advantageously, but not exclusively, the electronic control unit 24 is configured so as to first operate by an 'object detection' algorithm to identify the position of said test chart T, and then operates by using a deep learning algorithm based on a 'convolutional neural network' to determine a 'heat map' HM of points available for measurement by said spectrum measurement device 11.

A 'heat map' HM defined on the test chart T is schematized in figure 11.

The electronic control unit 24 is configured so as to process said 'heat map' with computer vision algorithms in order to extract an ordered list of measurement points P1, P2, P3, Px.

The measurement points P1, P2, P3, Px are to be meant as being the colour areas which are determined to be subjected to detection by the spectral sensor 16.

The measurement points generally are circular areas, with diameter between 2 mm and 8 mm.

The apparatus 10 according to the invention can even comprise a three-dimensional sensor for detecting the coordinates of the measurement points P1, P2, P3, Px in said test chart T.

Then, it is understood that an apparatus 10 according to the present invention allows to achieve the task and the intended objects.

In particular, and by way of application example, the present apparatus 10 according to the invention helps a user who is dealing with printing, for example, advertising material digitally; such user buys a printer, and needs for instruments for calibrating the printer; the apparatus 10 according to the present invention is dedicated to acquire information to perform the printer calibration.

They print the image, out instrument acquires it and provides these pieces of information.

Generally, the digital printers are preferably configured to meet the requests of the International standards, for example as required by the 'Fogra standards'.

Fogra institute is to be meant to be the well-known institution which performs tests and quality controls of the printing processes and materials according to the International ISO standards (in particular the ISO standard series 12647), by releasing a specific certificate based upon the type of process put under examination. 'FograCert', in fact, comprises a wide standardized test programme aiming at certifying the quality of the pre-printing technologies, that is everything that concerns the correct colour communication through data and parameters as much as precise as possible, with the purpose of optimizing the set-up phase, the procedures and the use of materials. The file management, the colour test, the paper test, the monitor alignment, and so on, belong to this phase.

FograCert provides that the digital printing processes are controlled with respect to the International standards included in the 'Process Standard Digital' (PSD), a compendium of recommendations and instructions for quality and compliant digital printing.

The research activities of Fogra Institute also include the definition of the so-called ICC colour profiles created together with the ICC (International Colour Consortium) working group.

ICC colour profiles represent a standardization of the variables and the printing conditions, so that the machine reproduces faithfully the colour, also on different paper types, through a procedure for converting information. It is a set of numeral data which normalizes in a uniform and comparable way the colour between different input/output devices to guarantee reliable and faithful printing results.

ICC profiles of Fogra are periodically perfected and updated.

Fogra certifications are quality guarantee since they are performed with impartiality and independence and in accordance with the highest International standards. Then, they are an important recognition for increasing the reputation of the company which adopts them, but also a useful instrument for positioning better in markets requiring products printed with high colour fidelity with respect to graphic projects and which maintain a uniform quality over time, run after run and as printing conditions vary.

The producers of digital printers do not know on which surfaces the prints will be made with their produced printers, for example if on a sheet of fabric or paper or on a ceramic plate.

For example, if a digital printer is used to perform prints on ceramics, the ceramic plate after printing has to be subjected to one o more firing phases, and to subsequent cooling phases, then the definitive colours of the printed image are available after many hours, if not after one or more days. It is then necessary to reduce as much as possible the downtown periods of time useful to calibrate the digital printer to print on a ceramic plate, and the apparatus according to the present invention is located indeed in this fundamental field of the colour calibration of a digital printer.

The apparatus 10 according to the present invention comprises a measuring head with inside a second vision channel, that is the image acquisition device, in which thanks to such second image acquisition device it is possible to see exactly where the spectrophotometer is brought to perform the colour measurements; in fact, it is very important to detect possible imperfections or dirt possibly present in the measurement points P1, P2, P3, Px, since if the spectrometer performs its measurement at the imperfection or the dirt area the measurement could result to be wrong and consequently even the calibration of the digital printer could result to be wrong.

Such second image acquisition device provides additional information for controlling the position of the measurement.

The apparatus 10 according to the invention thanks to the collaborative robot can be mounted above or next to the same digital printer therefrom the sheets or plates, on which the measurements are to be carried out, emerge, so as to measure directly on the site where the colour is located.

Moreover, the colour measuring apparatus according to the invention allows to perform measurements both for verifying correspondence with ICC colour profiles, and for carrying out periodic inspection measurements of the quality of printed colours.

The second image acquisition device 25 can comprise, or can consist of, a multispectral chamber, that is a spectral sensor.

The apparatus 10 according to the invention can be used also for calibrating monitor, scanner and digital cameras.

Then it is necessary to take a shot, according to the illumination characteristics required by the regulations, with an RGB type camera; by measuring the spectral values of the acquired photo it is possible to make a ICC profile for such camera. Still in short, the measuring apparatus 10 according to the present invention operates as described hereinafter.

As schematized in figure 8, a test chart T is arranged in the field of vision of the first image acquisition device 23, for example resting on a supporting plane 50.

From the acquired image, or the acquired images if more than one, through the first image acquisition device 23, the electronic control unit 24 determines the type of the test chart T, the dimensions of the test chart T, the position of said test chart T with respect to a reference coordinate system of said robot 17, that is it determines its position on the supporting plane 50.

Afterwards, based upon the same image, the electronic control unit 24 determines the shape and the position of each single quadrangular area T1, T2, T3, Tx.

A subsequent phase provides that the electronic control unit 24, through a 'deep learning' algorithm based on a 'convolutional neural network', estimates a 'heat map' highlighting the areas of the quadrangular area on which the measurements could be performed by the spectrum sensor 11, as schematized in figure 11.

A subsequent phase provides that the electronic control unit 24, through computer vision algorithms, processes the 'heat map' to extract an ordered list of measurement points P1, P2, P3, Px.

Still afterwards, a subsequent phase provides that the electronic control unit 24 converts the information related to the measurement points P1, P2, P3, Px into coordinates of such measurement points with respect to a coordinate system of the robot 17.

Once defined the coordinates of the measurement points P1, P2, P3, Px with respect to the robot 17, the electronic control unit 24 determines the motions of the robot 17 itself for positioning the spectrum measuring device 11 in subsequent measurement positions, each measurement position being defined by the position of the window 15 facing a measurement point P1, P2, P3, Px.

Thanks to the apparatus 10 according to the invention, if the robot 17 is positioned above a printer and it is connected thereto, it is possible that the same apparatus 10 receives an activation signal from the printer, and after few moments from the end of printing the same apparatus 10 actuates automatically to look for in the printer exit area the just printed test chart T, or another image to be controlled.

Then, generally, once detected the test chart, the first chamber tells where there is a patch, that is colour small rectangle, whereas the second chamber sees in close way the exact position of the patch, and the exact position of its centre, and moreover it verifies if the position of the spectrum sensor lies really inside the patch, so that the same spectrum sensor follows the detections really inside a provided patch.

This technique allows to measure even moving targets, such as for example a printed target and still carried forward by the printer.

The second chamber, then, has to guarantee that the detection takes place in the patch and that really the part which is detected by the spectrophotometer is a portion of the expected colour, and that the patch area is uniform.

A video camera is accurate to a tenth of millimetre, whereas the spectrophotometer performs detections on circular areas with diameter between 2 mm and 8 mm.

The second chamber, that is the second image acquisition device, provides information related to the real displacement and positioning of the spectrophotometer at the centre of the measurement point, or if actually the spectrum sensor, that is the spectrophotometer, is displaced with respect to the measurement point, and then if the spectrum sensor has to be moved.

Thanks to the second chamber it is possible to obtain from the test chart, or from any other image on which the colours are measured to compare them with the expected colours of the screen image, also information on the state of the digital printer, for example if a certain colour has been really printed or if there are technical problems for dispensing that colour, such as for example the obstruction of a channel for the passage of that colour.

The apparatus according to the invention can comprise also an auxiliary light, to be meant of standardized type, positioned with a different angle with respect to the illumination means of the measuring device 11, so as to allow the measuring device 11 to perform multi-angle measurements and to obtain information about lucidity and opacity of the print.

The first image acquisition device, mounted at the edge of the end 20 of the robot 17, can perform BRDF (bidirectional reflectance distribution function) measurements to detect if a certain colour changes as the illumination tilting changes.

The present invention has been sofar described with reference to preferred embodiments. It is to be meant that other embodiments belonging to the same inventive core may exist, as defined by the protective scope of the herebelow reported claims.

## Claims

1. Apparatus (10) for measuring colour particularly for digital printing, comprising:
a) handling means (17) having at least three degrees of freedom, said handling means (17) including a support base (18), an articulated group (19) and an end element (20),
b) a spectrum measuring device (11), in turn comprising
- a box-like body (12) having a first face (13) intended, in use, to face a test chart (T), said test chart (T) comprising a plurality of adjacent colour areas, said first face (13) being provided with a window (15);
- a spectral sensor (16) configured to measure the colour spectrum data of a light (L) received through said window (15), the received light (L) being a light reflected from said test chart (T) or a light transmitted through said test chart (T);
said spectrum measuring device (11) being mounted on said end element (20) of said handling means (17),
c) a first image acquisition device (23) configured to capture one or more images (IM), or a video, of at least a portion of said test chart (T),
d) an electronic control unit (24) connected to said handling means (17), to said spectrum measuring device (11) and to said first image acquisition device (23), said electronic control unit (24) being configured to analyse said at least a portion of said test chart (T) and to determine:
- the type of said test chart (T),
- the dimensions of said test chart (T),
- the position of said test chart (T) with respect to a reference coordinate system of said handling means (17),
- the position of each colour area of said test chart (T),
- the movements of said handling means (17) for positioning said spectrum measuring device (11) in subsequent measurement positions, each measurement position being defined by the position of said window (15) facing said colour area.

2. The apparatus according to claim 1, wherein said first image acquisition device (23) is fixed to said end element (20).

3. The apparatus according to claims 1 or 2, comprising a second image acquisition device (25) positioned fixed and in proximity to said device of said spectral sensor (16), said second image acquisition device (25) being configured to acquire one or more images, or a video, of a single colour area of said test chart (T).

4. The apparatus according to one or more of the preceding claims, wherein said test chart (T) comprises an ordered matrix of quadrangular areas (T1, T2, T3, Tx) of colours.

5. The apparatus according to one or more of the preceding claims, wherein said handling means (17) comprises a six-axis collaborative robot.

6. The apparatus according to one or more of the preceding claims, wherein said spectrum measurement device (11) comprises illumination means configured to illuminate said test chart (T) through said window (15).

7. The apparatus according to claim 1, wherein said electronic control unit (24) operates to identify the position of said test chart (T) by using computer vision and deep learning algorithms.

8. The apparatus according to the previous claim, wherein said electronic control unit (24) is configured so as to first operate by using an 'object detection' algorithm to identify the position of said test chart (T), and then operates by using a deep learning algorithm based on a 'convolutional neural network' to determine a 'heat map' (HM) of points available for measurement by said spectrum measurement device (11), said electronic control unit (24) being configured so as to process said 'heat map' with computer vision algorithms in order to extract an ordered list of measurement points.

9. The apparatus according to one or more of the preceding claims, comprising a three-dimensional sensor for detecting the coordinates of the measurement points (P1, P2, P3, Px) in said test chart (T).

10. The apparatus according to one or more of the preceding claims, wherein said test chart is a substantially three-dimensional test chart (T10, T20).
